# FASCICULE DE BREVET EUROPEEN

(11) **EP 3 487 908 B1**
(45) Date de publication et mention de la délivrance du brevet: **27.05.2020**
(21) Numéro de dépôt: 17758585.8
(22) Date de dépôt: 25.07.2017
(51) Int. Cl.: C08G 69/26, C08G 69/28

(54) **PROCÉDÉ DE SYNTHÈSE DE POLYAMIDE PA 6-6**
POLYAMID-PA 6-6-SYNTHESEVERFAHREN
POLYAMIDE PA 6-6 SYNTHESIS PROCESS

(30) Priorité: 25.07.2016 FR 1670404
(43) Date de publication de la demande: 29.05.2019
(73) Titulaire: Arkema France, 92700 Colombes (FR)
(72) Inventeur: DUBOIS, Jean-Luc, 69390 Millery (FR)
(74) Mandataire: Schaefer, Anne-Sophie
(86) Numéro de dépôt international: PCT/FR2017/052048
(87) Numéro de publication internationale: WO 2018/020128

(56) Documents cités:
- JP-A- 2006 321 826
- US-A- 4 861 815

## Description

### DOMAINE DE L'INVENTION

La présente invention concerne un procédé de synthèse de polyamide PA 6-6 à partir d'acide adipique et d'hexaméthylène-diamine ainsi que le polyamide issu de ce procédé.

### ARRIERE-PLAN TECHNIQUE

Les polyamides sont généralement synthétisés par polycondensation d'une diamine avec un diacide ou par polycondensation d'un aminoacide.

Le PA 6-6 a été le premier polyamide synthétisé en 1935 puis industrialisé par Du Pont de Nemours dès 1938. Ce PA 6-6 ou, selon la dénomination scientifique, poly(hexaméthylène adipamide) est souvent aussi appelé Nylon® 6-6.

La synthèse du PA 6-6 utilisant comme matières premières l'acide adipique et l'hexaméthylène-diamine (HMDA) est notamment décrite dans «Les Techniques de l'Ingénieur : J6 515 - pp 1-7». Le procédé consiste dans une première phase dite de salification, à mélanger en solution aqueuse l'acide adipique et l'hexaméthylène-diamine en veillant par ajustement du pH à atteindre l'équimolécularité et former le « Sel de Nylon®6-6». La solution est dans une deuxième phase concentrée jusqu'à 77% par évaporation sous une pression de 0,3 bar. Dans un troisième stade, on procède à la polycondensation sous 18 bars avec une augmentation de la température à 250°C accompagnée de l'élimination de l'eau de polycondensation. Lors de la quatrième étape, on abaisse progressivement la pression avec élimination d'eau et on augmente la température à 270°C, température qui est maintenue le temps de la « cuisson » conduisant au polymère final.

Toutefois, le PA 6-6 préparé selon ce procédé présente une reprise en eau (ou une absorption d'humidité), relativement importante (8,5%/24 heures, PEP Review 2015-06, Polyamide (Nylon) 6 and 66 Process Summary p. 22). Or, il importe que cette reprise en eau soit aussi basse que possible, notamment pour éviter son incidence sur la stabilité dimensionnelle des pièces fabriquées à partir de cette résine.

C'est donc un objet de la présente invention que de fournir un procédé de préparation du PA 6-6 qui permette de surmonter cet obstacle.

### RESUME DE L'INVENTION

La présente invention découle de la mise en évidence inattendue, par les présents inventeurs, que des PA 6-6 synthétisés en présence d'un mélange d'un ester de α,ω-diacide gras mono-insaturé et d'un nitrile d'un ester d'acide gras mono-insaturé, présentaient une reprise en eau diminuée par rapport à du PA 6-6 préparé sans ce mélange.

Ainsi, l'invention concerne un procédé de synthèse de polyamide PA 6-6 comprenant :
- une première étape de réaction, en présence d'eau, d'un composé de formule (I) :

   R₀-OOC-(CH₂)₄-COO-R'₀ (I)

   dans laquelle R₀ et R'₀, identiques ou différents, représentent H ou un radical alkyle linéaire ou ramifié comprenant de 1 à 4 atomes de carbone,
   avec de l'hexaméthylène-diamine (HMDA), notamment à une température inférieure à 160 °C, pour former un milieu réactionnel, puis
- une deuxième étape de chauffage du milieu réactionnel à une température supérieure ou égale à 200°C ;
   le milieu réactionnel comprenant en outre :
   - un composé de formule (A) :

      R₁-OOC-(CH₂)ₙ-CH=CH-(CH₂)ₙ-COO-R₂ (A)
   - et/ou un composé de formule (B) :

      R₃-(CH₂)ₘ-CH=CH-(CH₂)ₙ-COO-R₄ (B)

      dans lesquelles :
      R₁, R₂ et R₄, identiques ou différents, représentent H ou un radical alkyle linéaire ou ramifié comportant 1 à 4 atomes de carbone,
      R₃ représente -CN ou -COOR₅, R₅ représentant H ou un radical alkyle linéaire ou ramifié comprenant de 1 à 4 atomes de carbone,
      m représente 0, 1 ou 2 et n est un entier compris entre 7 et 13, bornes incluses.

La présente invention concerne également un polyamide PA 6-6 susceptible d'être obtenu par la mise en œuvre du procédé tel que défini ci-dessus.

La présente invention concerne également un polyamide PA 6-6 comprenant au moins un résidu sélectionné dans le groupe constitué des résidus de formules (A') et (B') :

-[CO-(CH₂)ₙ-CH=CH-(CH₂)ₙ-CO]- (A'),

-[CO-(CH₂)ₘ-CH=CH-(CH₂)ₙ-CO]- (B'),

où m représente 0, 1 ou 2 et n est un entier compris entre 7 et 13, bornes incluses.

La présente invention concerne également l'utilisation d'un polyamide PA 6-6 tel que défini ci-dessus, pour la production de fibres textiles, pour la production de fibres pour moquettes, pour la production de trames de pneus, ou pour la production de pièces moulées, telles que des tubes.

### DESCRIPTION DETAILLEE DE L'INVENTION

### Procédé

Comme cela apparaîtra clairement à l'homme du métier, le procédé de l'invention prévoit notamment de produire un polyamide PA 6-6 par réaction de l'acide adipique sur l'HMDA en présence d'eau et d'un mélange de composés à chaîne grasse mono-insaturée bi-fonctionnels. Ainsi, la première étape est une étape dite de salification correspondant notamment à la synthèse de l'adipate d'hexaméthylènediamine (ou sel de Nylon®6-6) avec hydrolyse préalable des éventuelles fonctions esters des réactifs. La deuxième étape est une étape de polymérisation par polycondensation des monomères, diamines et diacides du milieu réactionnel. Les composés de formules (A) et (B) sont susceptibles de réagir avec le HDMA pour former des fonctions amides et ainsi s'inscrire dans le polymère au cours de la polycondensation de la deuxième étape ou, s'agissant de nitrile-acides, c'est-à-dire lorsque R₃ = -CN, de constituer des terminateurs de chaînes lorsque -CN n'a pas été totalement hydrolysé pour donner une fonction acide entrant dans la chaîne de polymérisation.

Lorsque à la fois du composé de formule (A) et du composé de formule (B) sont compris dans le milieu réactionnel, ces composés peuvent être ajoutés au milieu réactionnel sous forme d'un mélange d'un composé de formule (A) et d'un composé de formule (B).

Par ailleurs, le composé de formule (A) et/ou le composé de formule (B) peut être ajouté au milieu réactionnel :
- lors de la première étape, en même temps que le composé de formule (I) et le HDMA et/ou ou au cours de la réaction entre le composé de formule (I) et le HDMA, et/ou
- lors de la deuxième étape, au début de l'étape et/ou en cours d'étape.

L'ajout du composé de formule (A) et/ou du composé de formule (B) lors de la première étape est notamment avantageux lorsque les composés de formules (A) et (B) sont sous forme estérifiée, les fonctions étant alors aisément hydrolysées en fonctions acides dans le mélange réactionnel. L'ajout du composé de formule (A) et/ou du composé de formule (B) lors de la deuxième étape convient particulièrement lorsque les composés de formules (A) et (B) sont introduits sous leurs formes acides, c'est-à-dire non estérifiées, directement réactives avec le HDMA.

De préférence, le composé de formule (I) est l'acide adipique, ou un mono- ou diester de cet acide avec un alcool léger, comprenant notamment de 1 à 4 atomes de carbone, en particulier sélectionné dans le groupe constitué du méthanol, de l'éthanol, du n-propanol, de l'isopropanol, du n-butanol, du 2-butanol, de l'iso-butanol et du tert-butanol, plus particulièrement le méthanol.

De préférence, le composé de formule (A) est un diacide gras mono-insaturé symétrique, un mono- ou diester dudit diacide avec un alcool léger, comprenant notamment de 1 à 4 atomes de carbone, en particulier sélectionné dans le groupe constitué du méthanol, de l'éthanol, du n-propanol, de l'isopropanol, du n-butanol, du 2-butanol, de l'iso-butanol et du tertio-butanol, plus particulièrement le méthanol. Sa chaîne grasse comporte 18 à 30, de préférence 18 ou 20 atomes de carbone, plus préférentiellement 18 atomes de carbone.

De préférence, le composé de formule (B) est un composé di-fonctionnel, nitrile/acide, nitrile/ester, diacide, acide/ester ou ester/ester d'une chaîne grasse mono-insaturée comportant de 11 à 19 atomes de carbone, plus préférentiellement 11 ou 12 atomes de carbone. Les formes esters résultent d'une réaction des fonctions acides avec un alcool léger, comprenant notamment de 1 à 4 atomes de carbone, en particulier sélectionné dans le groupe constitué du méthanol, de l'éthanol, du n-propanol, de l'isopropanol, du n-butanol, du 2-butanol, de l'iso-butanol et du tert-butanol, plus particulièrement le méthanol.

De préférence, les composés de formules (I), (A) et (B) sont introduits dans le milieu réactionnel sous forme partiellement ou totalement estérifiées.

Ainsi on préfère que R₀, R'₀, R₁, R₂, et R₄ identiques ou différents, représentent H ou un groupement -CH₃ et que R₃ représente -CN.

De même, on préfère que m = 0 et n = 7.

De préférence, le mélange du composé de formule (A) et du composé de formule (B) comprend de 95 à 99,9 % molaire du composé de formule (A) et de 0,1 à 5 % du composé de formule (B), plus préférablement de 98 à 99,5% molaire du composé de formule (A) et de 0,5 à 2% molaire du composé de formule (B).

De préférence également, la somme des quantités du composé de formule (A) et du composé de formule (B) dans le milieu réactionnel représente de 0,1 à 20 % molaire, plus préférablement de 0,5 à 5% molaire, et de manière encore plus préférée de 1 à 3% molaire, du composé de formule (I). Dans ce cadre, comme l'homme du métier le comprendra bien, lorsqu'uniquement l'un du composé de formule (A) et du composé de formule (B) est présent dans le milieu réactionnel, la quantité de l'autre est considérée égale à 0%.

De préférence, la concentration molaire en HMDA dans le milieu réactionnel est légèrement supérieure à celle du composé de formule (I) et telle que le rapport nombre de fonctions amine/nombre des fonctions acides, à savoir -COOH, -COOR et -CN (-CN étant comptabilisé comme acide du fait de sa capacité à s'hydrolyser en acide), est compris entre 0,97 et 1,03, plus préférablement entre 0,99 et 1,01.

De préférence, la première étape est conduite en présence d'eau, notamment en présence d'une quantité d'eau telle que le rapport molaire de la quantité eau / la somme des quantités de composé de formule (I), du HMDA, du composé de formule (A) et du composé de formule (B) est compris entre 1:15 et 15:1, plus préférablement entre 1:10 et 10:1, et encore plus préférablement entre 1:2 et 2:1. La présence d'eau en excès ne porte pas préjudice aux performances de la réaction. Toutefois, la durée et donc le coût, de l'extraction de l'eau conduisent à réduire autant que possible cette quantité.

De préférence, la première étape est conduite à une température à une température modérée, c'est à dire comprise entre 80 et 160°C, plus préférablement entre 100 et 130°C. De préférence, la deuxième étape est conduite à haute température, c'est-à-dire à une température comprise entre 200 et 300°C.

De préférence également, la différence de température entre les deux étapes est d'au moins 50°C, plus préférablement d'au moins 60°C, encore plus préférablement d'au moins 80 °C et de manière particulièrement préférée d'au moins 100°C.

De préférence, la première étape est conduite sous une pression de 1 à 3 bar, plus préférentiellement de 1 à 2,1 bar.

De préférence, la première étape comprend également une extraction par distillation des alcools, et éventuellement de l'ammoniac, produit au cours de cette étape. De préférence, la première étape comprend une extraction d'au moins 70, 80 ou 90% molaire des alcools, et éventuellement de l'ammoniac, produit au cours de cette étape. Ces alcools proviennent notamment de l'hydrolyse des fonctions esters. Il est avantageux d'éliminer ces alcools afin d'éviter la formation d'amines N-alkylées préjudiciables aux propriétés du polyamide PA 6-6 formé.

Dans un mode de réalisation du procédé selon l'invention, la première étape ne comprend pas de chauffage. Selon ce mode de réalisation, dès le milieu réactionnel constitué, on passe à la deuxième étape. Ce mode de réalisation est avantageux notamment lorsque les composés de formules (I), (A) et (B) sont introduits dans le milieu réactionnel sous une forme acide, c'est-à-dire non estérifiée, c'est-à-dire lorsque R₀, R'₀, R₁, R₂, R₄ et éventuellement R₅ représentent H.

De préférence, la deuxième étape comprend les sous-étapes suivantes :
a) Chauffage du milieu réactionnel issu de la première étape à une température comprise entre 200 et 300 °C, de sorte que la différence de température avec la première étape est d'au moins 60 °C, notamment d'au moins 80°C, sous une pression comprise entre 7 et 40 bars avec une extraction d'eau résiduelle par évaporation, et
b) réduction de la pression jusqu'à la pression atmosphérique, notamment sub-atmosphérique, à la même température, et
c) chauffage à une température de 270 à 280 °C, notamment pour achever la polycondensation, en général sous vide, notamment pour éliminer les dernières traces d'eau.

Le procédé selon l'invention peut être conduit de manière discontinue (en batch) dans un seul ensemble réactionnel, ou en continu, les étapes ou phases des étapes étant alors réalisées successivement dans des réacteurs spécifiques.

De préférence, le milieu réactionnel comprend un catalyseur d'hydrolyse des esters. Le catalyseur d'hydrolyse des esters peut être ajouté au milieu réactionnel au début de la première étape. Le catalyseur de d'hydrolyse des esters peut notamment être :
- une base minérale, telle qu'un hydroxyde de métal alcalin ou alcalinoterreux, notamment NaOH, KOH, Ca(OH)₂, Ba(OH)₂;
- une base forte organique aprotique, telle que le triazabicyclodécène, le triazole, le 1,8-diazabicyclo[5.4.0]undéc-7ène (DBU), le 1,5-diazabicyclo[4.3.0]non-5-ène (DBN), ou le 1,4-diazabicyclo[2.2.2]octane (DABCO) ;
- un catalyseur amphotère, tel que les oxydes ou sels de zinc, en particulier ZnO, les alcanoates, l'acide sulfurique H₂SO₄, le phosphate de bore, l'acide phosphorique H₃PO₄, supporté, par exemple sur terre de diatomées, ou non, le phosphate d'aluminium, les aluminosilicates, les catalyseurs de type phosphate ou phosphorique étant préférés.

Le catalyseur est utilisé de préférence à une concentration molaire inférieure à 1% par rapport au HMDA.

### Polyamide

De préférence, le polyamide PA 6-6 selon l'invention, notamment obtenu par le procédé selon l'invention, présente un taux de reprise en eau inférieur à 8, 7, 6, 5, 4, 2 ou 1% en masse.

Comme on l'entend ici, le taux de reprise en eau est le rapport de la masse d'un échantillon de polyamide plongé dans l'eau, notamment jusqu'à l'atteinte d'un équilibre, de laquelle on soustrait la masse de l'échantillon sec, sur la masse de l'échantillon sec, multiplié par 100. La mesure de la quantité d'eau absorbée peut être effectuée par pesée, selon la norme ASTM D 570 - 98, ou en mesurant la radioactivité d'un échantillon plongé dans le l'eau tritiée (³H₂O), comme cela est notamment décrit dans Valenzuela et al. (2011) Journal of Applied Polymer Science 121:1311-1320.

De préférence, le polyamide PA 6-6 selon l'invention, notamment obtenu par le procédé selon l'invention, présente une viscosité relative de 30 à 80, plus préférentiellement de 30 à 50.

Comme on l'entend ici, la viscosité relative est le rapport des temps mis i) par une solution de polyamide à 8,4% poids dans un solvant 90/10 acide formique/eau à 25°C et ii) le solvant, pour passer à travers un viscosimètre capillaire.

De préférence, le polyamide PA 6-6 selon l'invention, notamment obtenu par le procédé selon l'invention, présente un poids moléculaire moyen de 10 000 à 100 000 g/mol, préférentiellement de 14 000 à 50 000 g/mol.

De préférence, le polyamide PA 6-6 selon l'invention, notamment obtenu par le procédé selon l'invention, présente un taux de N-alkylation inférieur à 1% molaire.

Comme on l'entend ici le taux de N-alkylation est calculé comme le rapport des fonctions N-méthylées sur le nombre d'unités d'hexaméthylène adipamide.

De préférence, le polyamide PA 6-6 selon l'invention, notamment obtenu par le procédé selon l'invention, comprend deux ou trois résidus différents sélectionnés dans le groupe constitué des résidus de formules (A') et (B').

Comme cela apparaitra clairement à l'homme du métier, le terme «résidu» désigne un monomère ou un comonomère constitutif d'un polymère ou d'un copolymère sous sa forme intégrée dans le polymère ou le copolymère.

De préférence, le polyamide PA 6-6 selon l'invention, notamment obtenu par le procédé selon l'invention, comprend plusieurs résidus de formules -[CO-(CH₂)ₙ-CH=CH-(CH₂)ₙ-CO]-(A') et/ou -[CO-(CH₂)ₘ-CH=CH-(CH₂)ₙ-CO]-(B').

De préférence, le polyamide PA 6-6 selon l'invention, notamment obtenu par le procédé selon l'invention, est tel que m = 0 et n = 7.

De préférence, le polyamide PA 6-6 selon l'invention, notamment obtenu par le procédé selon l'invention, est tel que le pourcentage molaire de la quantité de résidus (A') et (B') par rapport à la quantité de résidus d'acide adipique et d'hexaméthylène diamine est de 0,1 à 20 % molaire.

L'invention sera davantage illustrée à l'aide des Exemples, non limitatifs, qui suivent.

### EXEMPLES

### Exemple 1

Dans une première étape on prépare une solution aqueuse d'adipate d'hexaméthylène diammonium.

Dans un réacteur on charge 35,9 g d'acide adipique, 30 g d'hexaméthylène diamine et 100 g d'eau. On ajoute ensuite un mélange constitué de 4,4 g de 9-octadécénodioate de méthyle (A) et de 0,13 g de 10-cyano-9-décénoate de méthyle (NC-CH=CH-(CH₂)₇-COOCH₃) (B), ce mélange ayant été obtenu après une réaction de métathèse croisée entre du décénoate de méthyle et de l'acrylonitrile telle que décrite dans la demande de brevet WO2014/122410. Le réacteur est alors fermé, purgé à l'azote, et pressurisé à 2,5 bars en chauffant jusqu'à 135 °C, et en maintenant la pression pendant 1 heure. Ensuite, la pression est progressivement réduite jusqu'à ce que 35 g de condensats soient collectés. Le mélange ainsi obtenu a une concentration d'environ 52 % poids.

Dans une deuxième étape, le polyamide 6-6 est préparé à partir de la solution aqueuse de sel d'adipate d'hexaméthylène diammonium à 52 % poids, ci-dessus, qui est chargée dans un évaporateur. Le mélange est chauffé à 153 °C sous une pression de 2,5 bars. A la fin de l'évaporation de l'eau, la concentration en espèces dissoutes dans l'eau est de 84 % poids. Cette solution est ensuite transférée dans un autoclave qui est alors chauffé pour obtenir une pression autogène de 18 bars. La phase de polymérisation sous pression dure 60 minutes, puis la pression est graduellement réduite, jusqu'à atteindre la pression atmosphérique. Pendant cette phase de décompression, l'eau produite pendant la réaction de polycondensation est éliminée. Le réacteur autoclave est alors maintenu pendant 30 minutes à pression atmosphérique et 270 °C. Finalement le réacteur est mis sous pression d'azote de l'ordre de 5 bars, afin de faciliter l'extrusion du polymère sous forme de joncs, refroidis à l'eau et coupés pour obtenir des granulés.

On mesure alors la capacité de reprise en eau du polymère selon la méthode suivante dite de «scintillation».

On utilise de l'eau tritiée de chez Fischer-Scientific, à 1 mCi/ml, qui est diluée dans de l'eau de qualité HPLC pour l'amener à une concentration de 0,2 µCi/ml. Des échantillons de 1 cm sont placés dans des flacons de 10 ml d'eau tritiée préparée précédemment, et stockés à 40°C. Après incubation pour différentes durées, les échantillons sont retirés, rincés avec de l'eau de qualité HPLC, et essuyés. Ils sont alors dissous dans de l'acide formique à 80 % poids et 12 ml de Cocktail de scintillation (ECOLITE, disponible chez Fisher Scientific). Une courbe de calibration est construite en utilisant des volumes croissants d'eau tritiée diluée dans le mélange d'acide formique et de liquide de scintillation. Le comptage par scintillation liquide est effectué en utilisant la courbe de calibration. La méthode de comptage est décrite dans la littérature, par exemple dans les Techniques de l'ingénieur, document P2552. Cette méthode permet de compter la quantité d'eau qui a diffusé dans l'échantillon. La reprise en eau est alors calculée comme étant RE (%) = 100*(Masse d'eau tritiée)/(Masse de l'échantillon sec initial).

Le taux de reprise en eau du PA 6-6 de l'exemple 1 mesuré par la méthode « scintillation » est de 6 % pour une durée d'immersion de 100 h.

### Exemple 2 (comparatif)

On reproduit l'Exemple 1, mais en omettant l'ajout du mélange des composants (A) et (B), et en utilisant 38 g d'acide adipique afin d'avoir dans le milieu un ratio fonctions amine/fonctions acide proche de 1.

Le taux de reprise en eau du PA 6-6 de l'exemple 2 est de 8 % pour une durée d'immersion de 100 heures.

La comparaison des Exemples 1 (selon l'invention) et 2 (comparatif) montre que le PA 6-6 selon l'invention a un taux de reprise en eau inférieur à un PA 6-6 « classique », est donc une stabilité dimensionnelle accrue.

### Exemple 3

On reproduit la synthèse du PA 6-6 de l'Exemple 1, en ajoutant lors de la première étape 0,24 g d'acide phosphorique (en équivalent H₃PO₄) en même temps que l'acide adipique.

Le taux de reprise en eau du PA 6/6 est mesuré selon une deuxième méthode dite par « pesage » selon la norme ASTM D 570 - 98.

Selon cette seconde méthode, on mesure le degré de reprise en eau, en plaçant des échantillons de PA6/6 préalablement séchés à 37 ° C dans une étuve en présence d'un tamis moléculaire (agent déshydratant). Les échantillons sont ensuite immergés dans une solution de 100 ml de solution saline à 0,150 M de NaCl). Les échantillons sont extraits régulièrement sur une durée de 100 jours. Après les avoirs rincés à l'eau distillée et essuyés sur papier filtre, pour éliminer l'eau adhérant à la surface, ils sont pesés. Ils sont ensuite séchés en étuve à 60 °C, jusqu'à ce que leur masse reste constante. Le taux de reprise en eau à l'équilibre est déterminé lorsque la prise de masse de plusieurs échantillons extraits successivement devient constante.

Cette méthode par pesage est utilisée dans les exemples 4 à 6 suivants. Les résultats obtenus sont résumés dans le **Tableau 1** ci-dessous

### Exemple 4

On procède comme dans l'exemple 1, en ajoutant lors de la première étape 0,20 g d'oxyde de zinc en même temps que les composés (A) et (B), et 0,2 g d'acide phosphorique juste avant l'enclenchement de la seconde étape.

### Exemple 5

On procède comme dans l'exemple 1, mais avec 35 g, d'acide adipique, une pression de 3 bars et une température de 160 °C lors de la première étape.

### Exemple 6

On procède comme dans l'exemple 1, mais avec 2,0 g de 9-octadécénodioate de méthyle (A) et 0,02 g de 10-cyano-9-décénoate de méthyle (NC-CH=CH-(CH₂)₇-COOCH₃) (B).

Les résultats de reprise en eau selon la seconde méthode sont regroupés dans le **Tableau 1** ci-dessous :

| **Exemples** | **Taux de reprise en eau à l'équilibre** |
|---|---|
| Exemple 3 | 6,3 % |
| Exemple 4 | 6,2 % |
| Exemple 5 | 6,4 % |
| Exemple 6 | 7,4 % |

On observe que le taux de reprise en eau des PA 6-6 des Exemples 3 à 6 selon l'invention restent inférieurs au taux de 8% de l'Exemple 2 comparatif.

## Revendications

1. Procédé de synthèse de polyamide PA 6-6 comprenant
- une première étape de réaction, en présence d'eau, d'un composé de formule (I)
R₀-OOC-(CH₂)₄-COO-R'₀ (I)
dans laquelle R₀ et R'₀, identiques ou différents, représentent H ou un radical alkyle linéaire ou ramifié comprenant de 1 à 4 atomes de carbone,
avec de l'hexaméthylène-diamine (HMDA) à une température inférieure ou égale à 160 °C, pour former un milieu réactionnel, puis
- une deuxième étape de chauffage du milieu réactionnel à une température supérieure ou égale à 200 °C ;
le milieu réactionnel comprenant en outre :
- un composé de formule (A) :
R₁-OOC-(CH₂)ₙ-CH=CH-(CH₂)ₙ-COO-R₂ (A)
- et/ou un composé de formule (B) :
R₃-(CH₂)ₘ-CH=CH-(CH₂)ₙ-COO-R₄ (B)
dans lesquelles :
R₁, R₂, et R₄, identiques ou différents, représentent H ou un radical alkyle linéaire ou ramifié comprenant de 1 à 4 atomes de carbone,
R₃ représente -CN ou COO-R₅, R₅ représentant H ou un radical alkyle linéaire ou ramifié comprenant de 1 à 4 atomes de carbone,
m représente 0, 1 ou 2 et n est un entier compris entre 7 et 13, bornes incluses.

2. Procédé selon la revendication 1, dans lequel R₀, R'₀, R₁, R₂, et R₄ identiques ou différents, représentent H ou un groupement -CH₃ et R₃ représente -CN.

3. Procédé selon la revendication 1 ou 2, dans lequel m = 0 et n = 7.

4. Procédé selon l'une des revendications 1 à 3, dans lequel le composé de formule (A) et le composé de formule (B) sont ajoutés au milieu réactionnel sous forme d'un mélange du composé de formule (A) et du composé de formule (B) et le mélange du composé de formule (A) et du composé de formule (B) comprend de 95 à 99,9 % molaire du composé de formule (A) et de 0,1 à 5 % du composé de formule (B).

5. Procédé selon l'une des revendications 1 à 4, dans lequel la somme des quantités du composé de formule (A) et du composé de formule (B) dans le milieu réactionnel représente de 0,1 à 20 % molaire de la somme des quantités du HMDA et du composé de formule (I).

6. Procédé selon l'une des revendications 1 à 5, dans lequel la première étape est conduite en présence d'une quantité d'eau telle que le rapport molaire de la quantité eau / la somme des quantités de composé de formule (I), du HMDA, du composé de formule (A) et du composé de formule (B) est compris entre 1:15 et 15:1.

7. Procédé selon l'une des revendications 1 à 6 dans lequel la première étape est conduite à une température comprise entre 80 et 160°C.

8. Procédé selon l'une des revendications 1 à 7 dans lequel la deuxième étape est conduite à une température comprise entre 200 et 300°C.

9. Polyamide PA 6-6 susceptible d'être obtenu par la mise en œuvre du procédé tel que défini dans l'une des revendications 1 à 8.

10. Polyamide PA 6-6 comprenant au moins un résidu sélectionné dans le groupe constitué des résidus de formules (A') et (B') :
-[CO-(CH₂)ₙ-CH=CH-(CH₂)ₙ-CO]- (A'),
-[CO-(CH₂)ₘ-CH=CH-(CH₂)ₙ-CO]- (B'),
où m représente 0, 1 ou 2 et n est un entier compris entre 7 et 13, bornes incluses.

11. Polyamide PA 6-6 selon la revendication 10, comprenant deux ou trois résidus différents sélectionnés dans le groupe constitué des résidus de formules (A') et (B').

12. Polyamide PA 6-6 selon la revendication 10 ou 11, comprenant plusieurs résidus de formules -[CO-(CH₂)ₙ-CH=CH-(CH₂)ₙ-CO]- (A') et/ou -[CO-(CH₂)ₘ-CH=CH-(CH₂)ₙ-CO]- (B').

13. Polyamide PA 6-6 selon l'une des revendications 10 à 12, dans lequel m = 0 et n = 7.

14. Polyamide PA 6-6 selon l'une des revendications 10 à 13, dans lequel le pourcentage molaire de la quantité de résidus (A') et (B') par rapport à la quantité de résidus d'acide adipique et d'hexaméthylène diamine est de 0,1 à 20 % molaire.

15. Utilisation d'un polyamide PA 6-6 tel que défini dans l'une des revendications 9 à 14, pour la production de fibres textiles, pour la production de fibres pour moquettes, pour la production de trames de pneus, ou pour la production de pièces moulées, telles que des tubes.

## Patentansprüche

1. Verfahren zur Synthese von Polyamid PA 6-6, umfassend
- einen ersten Schritt des Umsetzens einer Verbindung der Formel (I)
R₀-OOC-(CH₂)₄-COO-R'₀ (I)
in der R₀ und R'₀ gleich oder verschieden sind und für H oder einen linearen oder verzweigten Alkylrest mit 1 bis 4 Kohlenstoffatomen stehen, mit Hexamethylendiamin (HMDA) in Gegenwart von Wasser bei einer Temperatur kleiner oder gleich 160 °C zur Bildung eines Reaktionsmediums, dann
- einen zweiten Schritt des Erhitzens des Reaktionsmediums auf eine Temperatur größer oder gleich 200 °C;
wobei das Reaktionsmedium außerdem Folgendes umfasst:
- eine Verbindung der Formel (A):
R₁-OOC-(CH₂)ₙ-CH=CH-(CH₂)ₙ-COO-R₂ (A)
- und/oder eine Verbindung der Formel (B):
R₃-(CH₂)ₘ-CH=CH-(CH₂)ₙ-COO-R₄ (B)
in denen:
R₁, R₂ und R₄ gleich oder verschieden sind und für H oder einen linearen oder verzweigten Alkylrest mit 1 bis 4 Kohlenstoffatomen stehen,
R₃ für -CN oder COO-R₅ steht, wobei R₅ für H oder einen linearen oder verzweigten Alkylrest mit 1 bis 4 Kohlenstoffatomen steht,
m für 0, 1 oder 2 steht und n eine ganze Zahl zwischen 7 und 13 einschließlich der Grenzen ist.

2. Verfahren nach Anspruch 1, wobei R₀, R'₀, R₁, R₂ und R₄ gleich oder verschieden sein können und für H oder eine -CH₃-Gruppe stehen und R₃ für -CN steht.

3. Verfahren nach Anspruch 1 oder 2, wobei m = 0 und n = 7.

4. Verfahren nach einem der Ansprüche 1 bis 3, wobei die Verbindung der Formel (A) und die Verbindung der Formel (B) in Form einer Mischung der Verbindung der Formel (A) und der Verbindung der Formel (B) zum Reaktionsmedium gegeben werden und die Mischung der Verbindung der Formel (A) und der Verbindung der Formel (B) 95 bis 99,9 Mol-% der Verbindung der Formel (A) und 0,1 bis 5 % der Verbindung der Formel (B) umfasst.

5. Verfahren nach einem der Ansprüche 1 bis 4, wobei die Summe der Mengen der Verbindung der Formel (A) und der Verbindung der Formel (B) im Reaktionsmedium 0,1 bis 20 Mol-% der Summe der Mengen des HMDA und der Verbindung der Formel (I) ausmacht.

6. Verfahren nach einem der Ansprüche 1 bis 5, wobei der erste Schritt in Gegenwart einer solchen Menge Wasser durchgeführt wird, dass das Molverhältnis von Wassermenge zu Summe der Mengen von Verbindung der Formel (I), des HMDA, der Verbindung der Formel (A) und der Verbindung der Formel (B) zwischen 1:15 und 15:1 liegt.

7. Verfahren nach einem der Ansprüche 1 bis 6, wobei der erste Schritt bei einer Temperatur zwischen 80 und 160 °C durchgeführt wird.

8. Verfahren nach einem der Ansprüche 1 bis 7, wobei der zweite Schritt bei einer Temperatur zwischen 200 und 300 °C durchgeführt wird.

9. Polyamid PA 6-6, das durch Durchführung des Verfahrens gemäß einem der Ansprüche 1 bis 8 erhältlich ist.

10. Polyamid PA 6-6, umfassend mindestens einen Rest aus der Gruppe bestehend aus den Resten der Formeln (A') und (B'):
- [CO-(CH₂)ₙ-CH=CH-(CH₂)ₙ-CO]- (A'),
-[CO-(CH₂)ₘ-CH=CH-(CH₂)ₙ-CO]- (B'),
wobei m für 0, 1 oder 2 steht und n eine ganze Zahl zwischen 7 und 13 einschließlich der Grenzen ist.

11. Polyamid PA 6-6 nach Anspruch 10, umfassend zwei oder drei verschiedene Reste, die aus der Gruppe bestehend aus den Resten der Formeln (A') und (B') ausgewählt sind.

12. Polyamid PA 6-6 nach Anspruch 10 oder 11, umfassend mehrere Reste der Formeln -[CO-(CH₂)ₙ-CH=CH-(CH₂)ₙ-CO]-(A') und/oder - [CO-(CH₂)ₘ-CH=CH-(CH₂)ₙ-CO]-(B').

13. Polyamid PA 6-6 nach einem der Ansprüche 10 bis 12, wobei m = 0 und n = 7.

14. Polyamid PA 6-6 nach einem der Ansprüche 10 bis 13, wobei der Molprozentanteil der Menge von Resten (A') und (B'), bezogen auf die Menge von Adipinsäure- und Hexamethylendiamin-Resten, 0,1 bis 20 Mol-% beträgt.

15. Verwendung eines Polyamids PA 6-6 gemäß einem der Ansprüche 9 bis 14 zur Herstellung von Textilfasern, zur Herstellung von Teppichfasern, zur Herstellung von Reifencords oder zur Herstellung von Formteilen, wie Rohren.

## Claims

1. Process for synthesizing polyamide PA 6-6, comprising:
- a first step of reacting, in the presence of water, a compound of formula (I):
R₀-OOC-(CH₂)₄-COO-R'₀ (I)
in which R₀ and R'₀, which may be identical or different, represent H or a linear or branched alkyl radical comprising from 1 to 4 carbon atoms,
with hexamethylenediamine (HMDA), at a temperature of less than or equal to 160°C, to form a reaction medium, and then
- a second step of heating the reaction medium to a temperature of greater than or equal to 200°C;
the reaction medium also comprising:
- a compound of formula (A):
R₁-OOC-(CH₂)ₙ-CH=CH-(CH₂)ₙ-COO-R₂ (A)
- and/or a compound of formula (B):
R₃-(CH₂)ₘ-CH=CH-(CH₂)ₙ-COO-R₄ (B)
in which:
R₁, R₂ and R₄, which may be identical or different, represent H or a linear or branched alkyl radical comprising from 1 to 4 carbon atoms,
R₃ represents -CN or COO-R₅, R₅ representing H or a linear or branched alkyl radical comprising from 1 to 4 carbon atoms,
m represents 0, 1 or 2 and n is an integer between 7 and 13, limits inclusive.

2. Process according to Claim 1, in which R₀, R'₀, R₁, R₂ and R₄, which may be identical or different, represent H or a -CH₃ group and R₃ represents -CN.

3. Process according to Claim 1 or 2, in which m = 0 and n = 7.

4. Process according to one of Claims 1 to 3, in which the compound of formula (A) and the compound of formula (B) are added to the reaction medium in the form of a mixture of the compound of formula (A) and of the compound of formula (B) and the mixture of the compound of formula (A) and of the compound of formula (B) comprises from 95 mol% to 99.9 mol% of the compound of formula (A) and from 0.1% to 5% of the compound of formula (B).

5. Process according to one of Claims 1 to 4, in which the sum of the amounts of the compound of formula (A) and of the compound of formula (B) in the reaction medium represents from 0.1 mol% to 20 mol% of the sum of the amounts of HMDA and of the compound of formula (I).

6. Process according to one of Claims 1 to 5, in which the first step is performed in the presence of an amount of water such that the mole ratio of the amount of water/sum of the amounts of compound of formula (I), of HMDA, of compound of formula (A) and of compound of formula (B) is between 1/15 and 15/1.

7. Process according to one of Claims 1 to 6, in which the first step is performed at a temperature of between 80 and 160°C.

8. Process according to one of Claims 1 to 7, in which the second step is performed at a temperature of between 200 and 300°C.

9. Polyamide PA 6-6 that may be obtained by performing the process as defined in one of Claims 1 to 8.

10. Polyamide PA 6-6 comprising at least one residue chosen from the group constituted by the residues of formulae (A') and (B'):
- [CO-(CH₂)ₙ-CH=CH-(CH₂)ₙ-CO]- (A'),
-[CO-(CH₂)ₘ-CH=CH-(CH₂)ₙ-CO]- (B'),
in which m represents 0, 1 or 2 and n is an integer between 7 and 13, limits inclusive.

11. Polyamide PA 6-6 according to Claim 10, comprising two or three different residues chosen from the group constituted by the residues of formulae (A') and (B').

12. Polyamide PA 6-6 according to Claim 10 or 11, comprising several residues of formulae -[CO-(CH₂)ₙ-CH=CH-(CH₂)ₙ-CO]- (A') and/or -[CO-(CH₂)ₘ-CH=CH-(CH₂)ₙ-CO]- (B').

13. Polyamide PA 6-6 according to one of Claims 10 to 12, in which m = 0 and n = 7.

14. Polyamide PA 6-6 according to one of Claims 10 to 13, in which the molar percentage of the amount of residues (A') and (B') relative to the amount of adipic acid and hexamethylenediamine residues is from 0.1 mol% to 20 mol%.

15. Use of a polyamide PA 6-6 as defined in one of Claims 9 to 14, for the production of textile fibres, for the production of carpet fibres, for the production of tyre cords or for the production of moulded parts, such as tubes.
